# EUROPEAN PATENT SPECIFICATION

(11) **EP 4 411 957 B1**
(45) Date of publication and mention of the grant of the patent: **18.02.2026**
(21) Application number: 22875767.0
(22) Date of filing: 08.09.2022
(51) Int. Cl.: H01M 50/367, H01M 50/213, H01M 50/227, H01M 50/233, H01M 50/271, H01M 50/342, H01M 50/50, H01M 50/574

(54) **BATTERY PACK**
BATTERIEPACK
BLOC-BATTERIE

(30) Priority: 28.09.2021 JP 2021157761
(43) Date of publication of application: 07.08.2024
(73) Proprietor: Panasonic Intellectual Property Management Co., Ltd., Osaka-shi, Osaka 571-0057 (JP)
(72) Inventor: SHIMIZU, Keisuke, Kadoma-shi, Osaka 571-0057 (JP)
(74) Representative: Novagraaf International SA
(86) International application number: PCT/JP2022/033723
(87) International publication number: WO 2023/053895

(56) References cited:
- WO-A1-2012/017586
- WO-A1-2012/017586
- WO-A1-2017/130259
- WO-A1-2021/039551
- WO-A1-2021/039551
- CN-A- 112 331 992
- JP-A- 2012 119 138
- US-B2- 10 938 018

## Description

### TECHNICAL FIELD

The present disclosure relates to a battery pack.

### BACKGROUND ART

A plurality of cylindrical batteries that are generally used in the form of a battery pack, such as cylindrical lithium-ion batteries, are electrically connected and housed in a case. In this case, when there is an anomaly in a cylindrical battery included in the battery pack, the cylindrical battery generates high-temperature gas. For this reason, an exhaust passage is provided inside the battery pack, and the high-temperature gas is exhausted out of the case through the exhaust passage.

PTL 1 discloses a battery module (battery pack) that includes a case accommodating a plurality of cylindrical batteries. The case is partitioned by an internally disposed circuit board into an accommodation section accommodating the plurality of cylindrical batteries and an exhaust passage for exhausting gas released from a cylindrical battery out of the case. Positive electrode terminals of the cylindrical batteries have respective protrusions inserted respectively in through holes in the circuit board. When the gas is released from inside the cylindrical battery, which is in an anomalous state, the gas flows into the through hole of the circuit board, in which case pressure acts on a one-way open valve that is a plate-shaped member disposed at one of faces of the circuit board, causing the one-way open valve to open and exhaust the gas into the exhaust passage.

### CITATION LIST

### Patent Literature

PTL 1: PCT International Publication No. 2012/017586
The document US 10938018 discloses a cell module including a plurality of battery cells each having a safety valve at a first end in a height direction, a first current collector plate including a main body having a through hole that at least partly overlaps the safety valve when viewed along the height direction and a lead extending into the through hole from the main body and being electrically connected to a first terminal of each of the battery cells, an exhaust duct disposed over a surface of the first current collector plate remote from the battery cells, and an insulating film being made of an insulating material and covering an area of the first current collector plate facing the exhaust duct. The safety valve opens when an internal pressure of any of the battery cells reaches or exceeds a predetermined level.

### SUMMARY OF THE INVENTION

In the battery pack configured to have the exhaust passage and exhaust the high-temperature gas out of the case through the exhaust passage, the high-temperature gas from the anomalous battery experiencing the anomaly may come into contact with neighboring batteries facing the same exhaust passage as the anomalous battery and thermally affect the
neighboring batteries.

The configuration described in PTL 1 may reduce the thermal effect on neighboring batteries by preventing the high-temperature gas that flows into the exhaust passage from coming into contact with the neighboring batteries. However, in cases where the battery module is to include a battery holder that includes a plurality of housing parts for one ends of the plurality of batteries to be inserted, a plate-shaped member including one-way open valves needs to be provided on an exhaust passage side of the batteries in addition to the battery holder. Therefore, an increased number of components may cause increased manufacturing costs of the battery pack and reduced energy density.

An object of the present disclosure is to provide a battery pack that is capable of ensuring gas exhaust performance for an anomalous battery while reducing thermal effect on other neighboring batteries and allows for reduced manufacturing costs and improved energy density.

A battery pack according to the present disclosure includes a battery module and a pack case. The battery module includes a plurality of batteries each including, at one end in a specified direction, a battery exhaust valve that opens in response to an increase in internal pressure; and a battery holder including a plurality of housing parts for the one ends of the plurality of batteries in the specified direction to be inserted. The pack case houses the battery module and internally includes an exhaust passage for gas exhausted from at least one of the plurality of batteries to be exhausted out of the pack case. Each of the plurality of housing parts includes a lid part facing the battery exhaust valve of a corresponding battery. The lid part includes an opening cover part that creates a larger holder opening with a greater outside diameter than the battery exhaust valve, and the opening cover part includes a ring-shaped or incomplete ring-shaped outer periphery that is defined by a weak part with less strength than a part external to the opening cover part.

The battery pack according to the present disclosure is capable of ensuring gas exhaust performance for an anomalous battery while restraining gas exhausted from the anomalous battery from coming into contact with other neighboring batteries, thus reducing thermal effect on those other neighboring batteries. Because of having a reduced number of components, the battery pack also allows for reduced manufacturing costs of the battery pack and improved energy density.

### BRIEF DESCRIPTION OF THE DRAWINGS

FIG. 1 is a schematic sectional view of a battery pack according to an exemplary embodiment.
FIG. 2 is a perspective view of a battery module of the battery pack illustrated in FIG. 1.
FIG. 3 is a sectional view taken along arrowed line A-A of FIG. 2, not illustrating some parts.
FIG. 4 is an exploded perspective view illustrating a battery holder and terminal boards that are on one end of FIG. 3.
FIG. 5 is an enlarged view illustrating how cylindrical batteries in part B of FIG. 3 are put together.
FIG. 6 is an enlarged view illustrating a half side on the end of FIG. 5.
FIG. 7 is a view of an opening cover part of the battery holder illustrated in FIG. 6, as seen from a bottom side of FIG. 6.
FIG. 8 is a view illustrating high-temperature gas being exhausted from one of the cylindrical batteries illustrated in FIG. 5 and a larger holder opening being created.
FIG. 9 is a view that corresponds to part C of FIG. 6, illustrating an opening cover part of a battery holder according to another example of the exemplary embodiment.
FIG. 10 is a view as seen from a bottom of FIG. 9.
FIG. 11 is a sectional view illustrating an essential part of a battery pack according to another example of the exemplary embodiment.

### DESCRIPTION OF EMBODIMENT

With reference to the drawings, a description is hereinafter provided of an exemplary embodiment of the present disclosure. In the following description, examples of shape, material, and quantity are given and can be changed as appropriate in accordance with battery pack specifications.

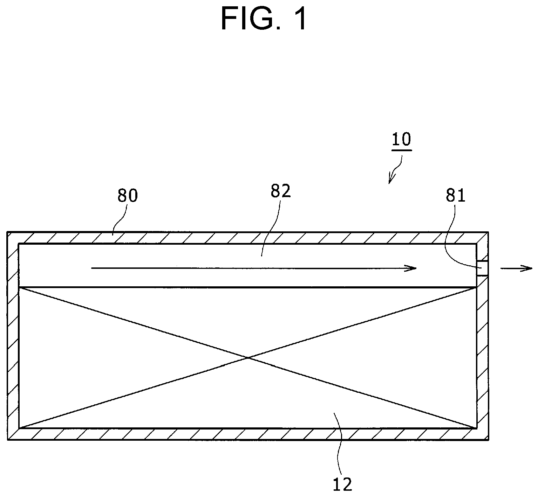

FIG. 1 illustrates a schematic configuration of battery pack 10. Battery pack 10 is used, for example, as a power supply for electric motor-driven apparatuses such as electric vehicles, electric bicycles, and electric motorcycles. Battery pack 10 is not limited to this usage and can be used as a power supply for various electric apparatuses.

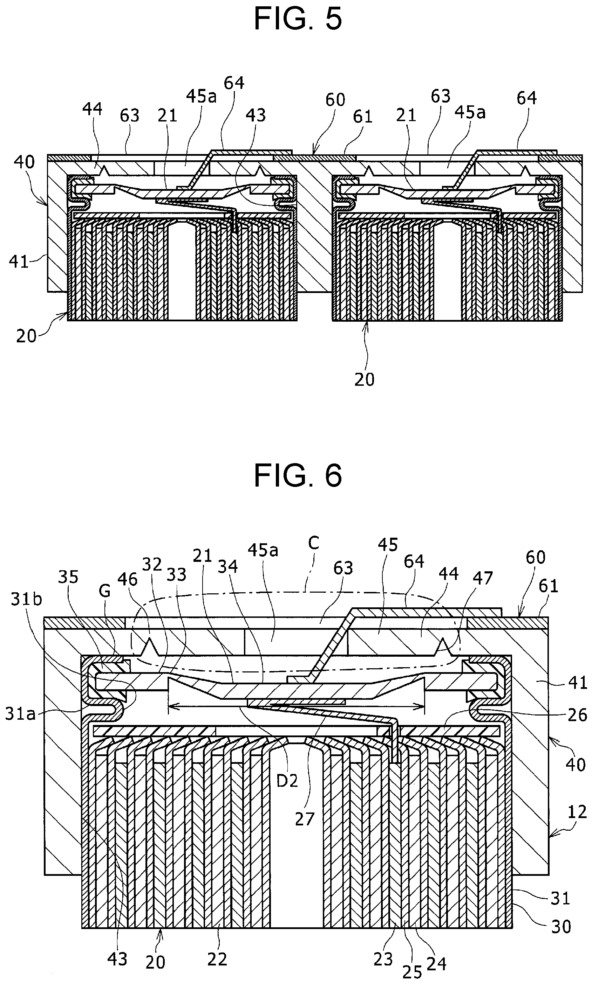

Battery pack 10 includes battery module 12 housing a plurality of batteries and pack case 80 housing battery module 12. The batteries to be used are, for example, non-aqueous electrolyte secondary batteries such as lithium-ion batteries. The batteries are not limited to a particular shape, a particular size, and other particulars; however, cylindrical batteries are suitable. A description provided below focuses on a case where the batteries are cylindrical batteries. While FIG. 1 does not provide a detailed illustration of battery module 12, battery module 12 includes, as illustrated in below-mentioned FIG. 5, FIG. 6, and other figures, the plurality of cylindrical batteries 20 and battery holders 40. Each of the plurality of cylindrical batteries 20 has, in a specified direction, namely a lengthwise and axial direction, ends housed in battery holder 40. In cases where the batteries are prismatic batteries, each of these batteries may have, in a height direction as a specified direction, ends housed in a battery holder.

Pack case 80 is a box substantially having the shape of a rectangular parallelepiped. An internal space of pack case 80 that crosses from a bottom to intermediate position in an up-down direction is where battery module 12 is disposed. Pack case 80 internally includes an upper space as exhaust passage 82. Exhaust passage 82 communicates with the outside via through hole 81 provided in pack case 80. Exhaust passage 82 allows gas exhausted from at least one of the plurality of cylindrical batteries 20 to be exhausted into the outside.

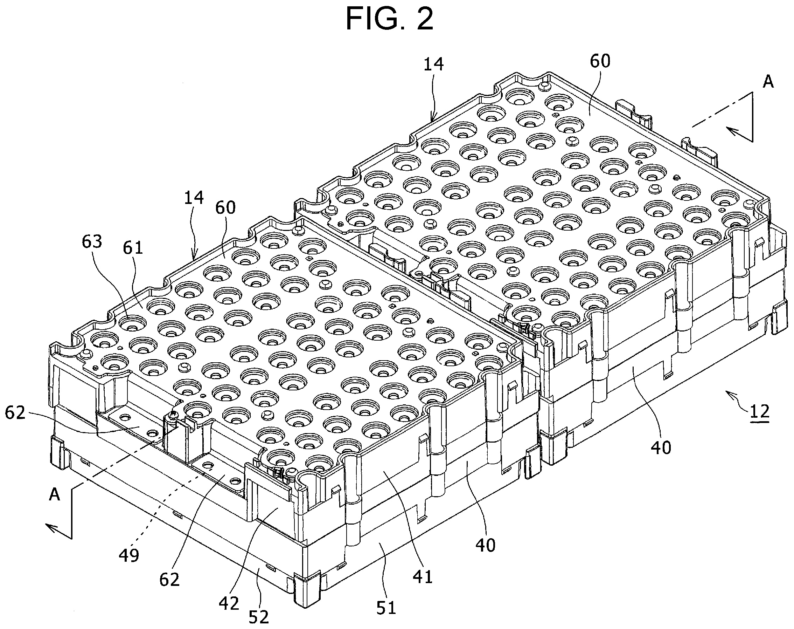

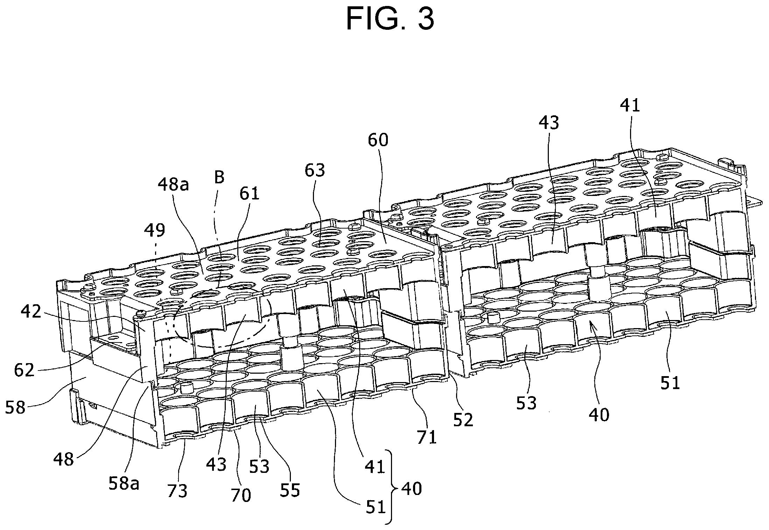

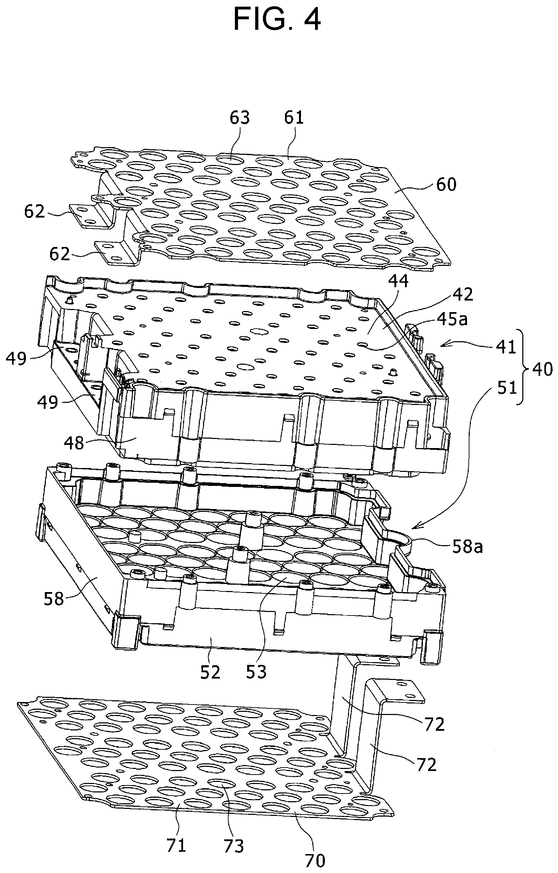

With reference to FIGS. 2 to 4, a detailed description is provided of constituent elements of battery module 12, particularly those other than cylindrical batteries 20 (FIGS. 5 and 6). FIG. 2 is a perspective view of battery module 12. FIG. 3 is a sectional view taken along arrowed line A-A of FIG. 2, not illustrating some parts. FIG. 4 is an exploded perspective view illustrating battery holder 40, positive electrode terminal board 60, and negative electrode terminal board 70 that are on one end of FIG. 3. For convenience of explanation, a direction along a row of through holes 63 positioned in terminal board 60 correspondingly to cylindrical batteries 20 and along a row of through holes 73 positioned in terminal board 70 correspondingly to cylindrical batteries 20 hereinafter refers to "a longitudinal direction" of battery module 12. A direction in which rows of through holes 63 and rows of through holes 73 are arranged hereinafter refers to "a lateral direction" of battery module 12. A direction matching the specified direction, namely the axial direction (lengthwise direction), of each cylindrical battery 20 (FIGS. 5 and 6) refers to "an up-down direction". Battery module 12 has "a top" at positive electrode terminal board 60 and "a bottom" at negative electrode terminal board 70.

Battery module 12 includes two battery blocks 14 arranged in the longitudinal direction, and two battery blocks 14 are electrically connected in series. Each of battery blocks 14 includes plural cylindrical batteries 20 and resin-made battery holder 40 holding the inserted axial ends of each cylindrical battery 20. Battery holders 40 of two battery blocks 14 have the same shape.

Each battery holder 40 includes upper holder 41 holding an upper one of the ends of each cylindrical battery 20 and lower holder 51 holding a lower one of the ends of each cylindrical battery 20, with upper and lower holders 41 and 51 connected by being screwed at their plural peripheral locations.

Upper holder 41 includes plate part 42, a plurality of upper housing parts 43 that are formed at plate part 42 and are cylindrically bored, each for the insertion of one of the axial ends, namely the upper end, of each of plural cylindrical batteries 20, and peripheral body wall part 48 projecting downward from a lower periphery of plate part 42. Upper housing parts 43 form a plurality of rows arranged in the lateral direction. In each of the rows, plural upper housing parts 43 are arranged in the longitudinal direction and each include an upward hollow part. Upper housing parts 43 include, at respective upper ends, a plurality of lid parts 44 that each include smaller holder opening 45a (FIG. 4) in a center. The plurality of upper housing parts 43 are arranged in a staggered configuration as a whole, with two rows of upper housing parts 43 that are adjacent in the lateral direction positioned differently in the longitudinal direction.

Lower holder 51 includes plate part 52, a plurality of lower housing parts 53 that are formed at plate part 52 and are cylindrically bored for the insertion of the lower ends of plural cylindrical batteries 20, and peripheral body wall part 58 projecting upward from an upper periphery of plate part 52. The plurality of lower housing parts 53 are positioned in an up-down direction superposed relation with the plurality of upper housing parts 43. Therefore, the plurality of lower housing parts 53 are arranged in a staggered configuration as a whole. Each of lower housing parts 53 includes a downward hollow part. Each lower housing part 53 includes, in a lower end, lower holder opening 55 for passage of a negative electrode lead (not illustrated) connected to negative electrode terminal board 70 (described later).

As illustrated in FIG. 3, peripheral body wall part 48 of upper holder 41 includes, at a lower inner periphery, lower peripheral wall part 48a that is thin-walled. Lower peripheral wall part 48a is internally fitted to upper peripheral wall part 58a provided at an upper end of peripheral body wall part 58 of lower holder 51.

Each battery block 14 further includes positive electrode terminal board 60 at an upper end and negative electrode terminal board 70 at a lower end. Positive electrode terminal board 60 includes body part 61 attached in close contact with an upper end of battery holder 40. Positive electrode terminal board 60 is disposed closer to exhaust passage 82 than battery holder 40 is. Negative electrode terminal board 70 includes body part 71 attached in close contact with a lower end of battery holder 40. Terminal boards 60 and 70 connect plural cylindrical batteries 20 in parallel.

Body part 61 of positive electrode terminal board 60 includes, at one end in the longitudinal direction (the left end in FIGS. 2 to 4), two downwardly bent positive bus bars 62 that are substantially L-shaped. Positive bus bars 62 are respectively disposed in close contact with upper faces of two first stepped parts 49 formed intermediate position, at the up-down direction, of one end of upper holder 41 in the longitudinal direction. Body part 71 of negative electrode terminal board 70 includes, at an opposite end in the longitudinal direction (the right end in FIG. 4), two upwardly bent negative bus bars 72 that are substantially L-shaped. Negative bus bars 72 are respectively disposed in close contact with lower faces of two second stepped parts (not illustrated) formed at a vertically intermediate position of an opposite end of upper holder 41 in the longitudinal direction. In this state, negative bus bars 72 has leading ends projecting from upper holder 41 in the longitudinal direction, and these parts can be connected in superimposition above and below other positive bus bars of adjacent battery block 14.

Body part 61 of positive electrode terminal board 60 includes plural circular through holes 63 positioned in superposed relation with the plurality of upper housing parts 43 and the plurality of lid parts 44 of upper holder 41 in the up-down direction. Positive electrode leads 64 (FIG. 6) are connected by bonding or another method to body part 61 of positive electrode terminal board 60 near through holes 63, respectively. Each of positive electrode leads 64 is led into through hole 63 and is electrically connected to positive electrode terminal 21 (FIG. 6) of cylindrical battery 20 (described later) through through hole 63 and smaller holder opening 45a of upper holder 41.

Body part 71 of negative electrode terminal board 70 includes plural circular through holes 73 positioned in superposed relation with lower holder openings 55 of the plurality of lower housing parts 53 of lower holder 51. The negative electrode leads (not illustrated) are connected by bonding or another method to body part 71 near through holes 73, respectively. Each of the negative electrode leads is led into through hole 73 and is electrically connected to a negative electrode terminal located at the lower end of cylindrical battery 20 (described later) through through hole 73 and lower holder opening 55. Positive electrode terminal 21 and the negative electrode terminal of cylindrical battery 20 correspond to electrode terminals, respectively.

Positive electrode lead 64 and the negative electrode lead may be joined respectively to back faces of body parts 61 and 71 of positive and negative electrode terminal boards 60 and 70. Another alternative may be that positive electrode lead 64 and the negative electrode lead are integrally formed respectively with the body parts of positive and negative electrode terminal boards 60 and 70 to be led into through holes 63 and 73.

Next, a detailed description is provided of a configuration of cylindrical battery 20 and a configuration of battery holder 40 (particularly upper holder 41) with reference to FIGS. 5 to 8. Cylindrical battery 20 is a lithium ion secondary battery or the like and includes, as illustrated in FIGS. 5 and 6, electrode group 22, a nonaqueous electrolyte (not illustrated), and battery case 30 housing electrode group 22 and the nonaqueous electrolyte. Battery case 30 is made of metal and includes bottomed case body 31 that is substantially cylindrical and sealing member 32 closing an opening of an upper end of case body 31 in an insulated state.

Electrode group 22 is a wound electrode group in which strip-shaped positive electrode 23 and strip-shaped negative electrode 24 are wound up with strip-shaped separator 25 interposed. Insulating plates 26 are disposed respectively on an upper and a lower end of electrode group 22. Positive electrode tab 27 connected to positive electrode 23 extends upward and is connected to a bottom face of sealing member 32. Negative electrode 24 is in contact with an inner peripheral surface of battery case 30 at an outermost peripheral surface, thus being electrically connected to battery case 30. A negative electrode tab may extend downward from negative electrode 24 to be connected to a bottom plate part of battery case 30.

The upper end of case body 31 includes, in an outer peripheral surface, annular groove 31a formed by external pressing or another method. In association with the formation of groove 31a, projecting part 31b is formed at the upper end of case body 31, projecting radially inward. Projecting part 31b supports sealing member 32 at an upper face via gasket 35. With gasket 35 on its inner peripheral side, open marginal part G of the upper end of case body 31 is crimped to collapse inwardly of battery case 30. Sealing member 32 is sandwiched between open marginal part G of the upper end and projecting part 31b via gasket 35 in the up-down direction, thus sealing the opening of case body 31.

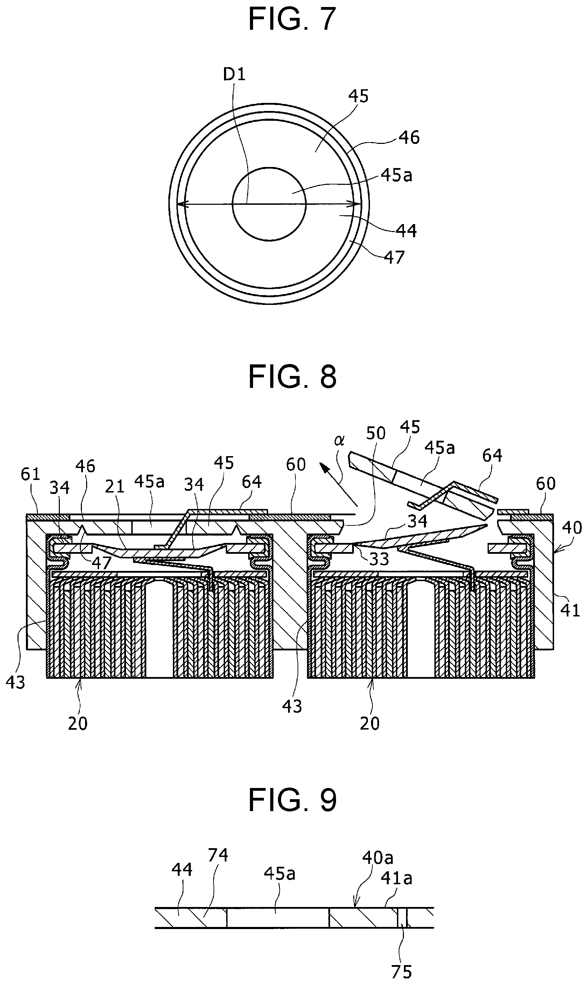

Sealing member 32 is made of metal and is substantially disk-shaped. Sealing member 32 includes substantially circular battery exhaust valve 34 having an outer periphery that is defined by annular thin-walled part 33. When an interior of battery case 30 reaches a predetermined pressure or higher, thin-walled part 33 breaks or melts, causing battery exhaust valve 34 to pop out and exhaust the internal gas. In other words, plural cylindrical batteries 20 each include, at the one of the axial ends, battery exhaust valve 34 that opens in response to an increase in internal pressure. In this case, battery exhaust valve 34 bumps against outwardly positioned opening cover part 45 (described later) of lid part 44 of upper holder 41 and separates opening cover part 45 from a part of lid part 44 that is external to opening cover part 45, thus creating larger holder opening 50 (FIG. 8) having a greater outside diameter than battery exhaust valve 34. In this way, as will be described later, ensuring gas exhaust performance for an anomalous battery and restraining the gas exhausted from the anomalous battery from coming into contact with other neighboring batteries are enabled at the same time.

Next, a detailed description is provided of battery holder 40. Upper holder 41 and lower holder 51 of battery holder 40 (FIGS. 2 to 4) are made of, for example, curable resin. The curable resin for each of holders 41 and 51 is a resin with a crosslinked structure that does not melt even when exposed to a temperature of 600°C or higher. For example, even when exposed to a high temperature ranging from 800°C to 1000°C inclusive, the resin does not melt but carbonizes, allowing each of holders 41 and 51 to maintain its shape. Thermosetting resins such as unsaturated polyesters, epoxy resins, melamine resins, and phenol resins are given as specific examples. Each of holders 41 and 51 is not limited to the curable resin and may be made of a thermoplastic resin such as polycarbonate, polyethylene, polypropylene, polyvinyl chloride, or polystyrene.

The resin for each of holders 41 and 51 includes, for example, at least one of a heat-absorbing filler or a heat-conductive filler and preferably both the heat-absorbing filler and the heat-conductive filler. The heat-absorbing filler exhibits an endothermic effect during thermal decomposition, and its specific examples include aluminum hydroxide and sodium bicarbonate, among others. Examples of the heat-conductive filler include metal oxides (e.g., aluminum oxide and zinc oxide), metal nitrides (e.g., aluminum nitride and boron nitride), and metal oxynitrides (e.g., aluminum oxynitride), among others.

Lid part 44 included in each of the plurality of upper housing parts 43 of upper holder 41 faces battery exhaust valve 34 of corresponding cylindrical battery 20 in the axial direction. Furthermore, opening cover part 45 that lid part 44 has is substantially disk-shaped and has an outer periphery that is defined by annular weak part 46 having less strength than the part external to opening cover part 45. When separated from the part external to the outer periphery of opening cover part 45, opening cover part 45 creates larger holder opening 50, which has the greater outside diameter than battery exhaust valve 34. Within opening cover part 45, smaller holder opening 45a is formed, being circular and having a smaller diameter than battery exhaust valve 34.

As illustrated in FIG. 7, lid part 44 includes circular groove 47 in a lower face when opening cover part 45 is seen from a bottom side of FIG. 6, and weak part 46 is shaped by this groove 47. Weak part 46 has diameter D1 that is smaller than a diameter of through hole 63 of positive electrode terminal board 60 and greater than outside diameter D2 (FIG. 6) of battery exhaust valve 34. Weak part 46 defines the outer periphery of opening cover part 45. Groove 47 is not limited to an inverted V-shaped cross section as illustrated in FIG. 6 and may have an arc-shaped or rectangular cross section. When force is applied to opening cover part 45 from below, lid part 44 breaks or melts at a base of groove 47 where stress is most concentrated, creating larger holder opening 50 (FIG. 8) to be described later. While weak part 46 is shaped by groove 47 in the present exemplary embodiment, weak part 46 is not limited to this. Weak part 46 may be shaped by a thin-walled part where resin-made lid part 44 of battery holder 40 is reduced in thickness, a through part passing through resin-made lid part 44 along the thickness of lid part 44, or a combination of the thin-walled part and the through part.

Positive electrode lead 64 connected to positive electrode terminal board 60 is electrically connected to positive electrode terminal 21 of the upper end of cylindrical battery 20 through smaller holder opening 45a.

In above-described battery pack 10, battery holder 40 includes opening cover parts 45 respectively in lid parts 44 facing the upper ends of cylindrical batteries 20. It is to be noted here that each of plural cylindrical batteries 20 is positioned by upper holder 41 and lower holder 51, thus being housed in battery holder 40. Since opening cover part 45 is included in each lid part 44 of upper holder 41, when plural cylindrical batteries 20 are housed in battery holder 40, each opening cover part 45 naturally faces battery exhaust valve 34 of cylindrical battery 20, aligning with battery exhaust valve 34. Therefore, when the gas, which has a high temperature, is ejected from cylindrical battery 20, force of the ejected high-temperature gas and thrusting force of battery exhaust valve 34 are applied to opening cover part 45 to break or melt weak part 46, which defines the outer periphery of opening cover part 45. Consequently, corresponding larger holder opening 50 (FIG. 8) is created.

In FIG. 8, cylindrical battery 20 on a right side of the drawing is illustrated as an anomalous battery that has internally generated the high-temperature gas, experiencing an anomaly. In this case, thin-walled part 33, which defines the outer periphery of battery exhaust valve 34 of the anomalous battery, has broken or melted due to pressure and heat of the high-pressure gas applied to thin-walled part 33, and battery exhaust valve 34 has popped out. When battery exhaust valve 34 bumps against a bottom of opening cover part 45 of upper holder 41 or when the pressure and the heat of the high-temperature gas from within the anomalous battery are applied to the lower side of opening cover part 45, weak part 46 of upper holder 41 break or melts, causing opening cover part 45 to pop out and create larger holder opening 50. At this point, positive electrode lead 64 makes a break with its base, resulting in an electrical disconnection between the anomalous battery and an electrical circuit connected to the neighboring batteries. Created in upper holder 41, larger holder opening 50, which is larger than battery exhaust valve 34, allows the gas from the anomalous battery to be ejected as indicated by arrow α in FIG. 8. In this way, the gas exhaust performance can be ensured for the anomalous battery, and the gas from the anomalous battery can be exhausted out of pack case 80 (FIG. 1) through exhaust passage 82 (FIG. 1).

On the other hand, each of the upper ends of the neighboring batteries, not the upper end of the anomalous battery, is extensively covered by opening cover part 45 and communicates with exhaust passage 82 through smaller holder opening 45a having a smaller opening area. This configuration can restrain the high-temperature gas from the anomalous battery from affecting those other neighboring batteries through exhaust passage 82 because although smaller holder openings 45a are formed in battery holder 40 for allowing positive electrode leads 64 to pass through and connect with positive electrode terminals 21 of cylindrical batteries 20, the opening areas of smaller holder openings 45a can be made smaller. Thus the thermal effect on the neighboring batteries can be restrained. Since the smaller diameters of smaller holder openings 45a are more advantageous for reducing the effect of the high-temperature gas from the anomalous battery on those other neighboring batteries, given wiring work for positive electrode leads 64, each smaller holder opening 45a is preferably set as small as possible in a range where the wiring work can be carried out without hindrance.

In this example, in addition to battery holder 40, a plate-shaped member including one-way open valves is not needed for restraining the high-temperature gas from the anomalous battery from affecting those other neighboring batteries. This allows for a reduced number of components, leading to reduced manufacturing costs of battery pack 10 and improved energy density.

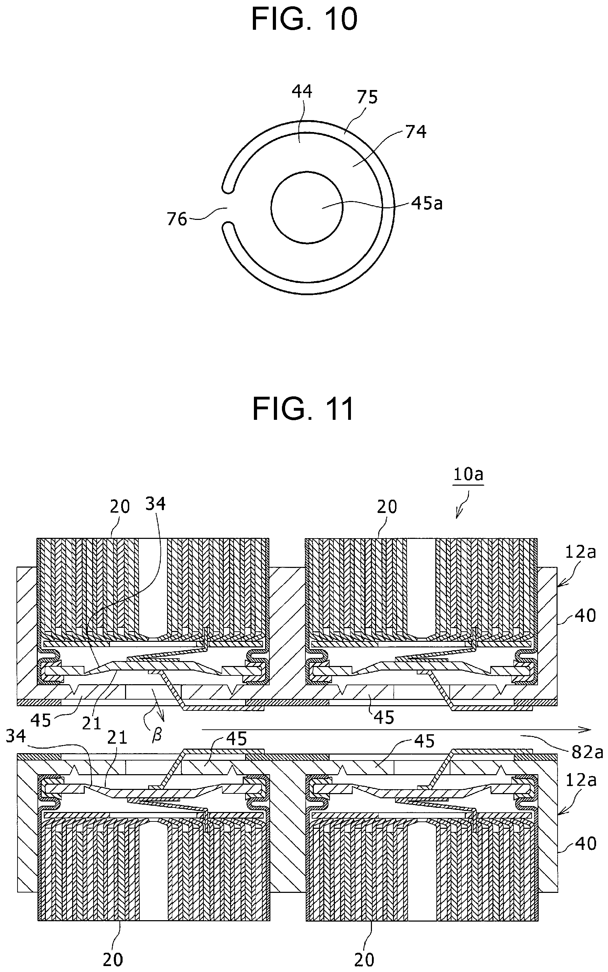

FIG. 9 is a view that corresponds to part C of FIG. 6, illustrating opening cover part 74 of battery holder 40a according to another example of the exemplary embodiment. FIG. 10 is a view as seen from a bottom side of FIG. 9. In this example, each lid part 44 of upper holder 41a includes opening cover part 74 having an outer periphery that is incomplete ring-shaped or specifically, is defined by C-shaped slit 75 passing through upper holder 41 along thickness of upper holder 41. When separated from a part external to its outer periphery, opening cover part 74 creates a larger holder opening with a greater outside diameter than battery exhaust valve 34 (FIG. 6). At this point, opening cover part 74 and the part of upper holder 41 that is external to opening cover part 74 are connected only by connection part 76 provided as a peripheral part with respect to the outer periphery of opening cover part 74.

In this case, when battery exhaust vale 34 of an anomalous battery pops out, as in the configuration of FIGS. 1 to 8, battery exhaust valve 34 bumps against a bottom of opening cover part 74 of upper holder 41a, or pressure and heat of high-temperature gas from within the anomalous battery are applied to the lower side of opening cover part 74, causing connection part 76 of upper holder 41 to break or melt or causing opening cover part 74 to be pushed outward while connection part 76 connects opening cover part 74 and the part external to opening cover part 74. Consequently, the larger holder opening is created. Other configurations and effects of this example are similar to those described with FIGS. 1 to 8.

Although not illustrated, the upper holder may have a groove that has a C-shape similar to the shape of slit 75 of FIG. 10 when seen in the up-down direction, as compared to that of FIGS. 1 to 8.

FIG. 11 is a sectional view illustrating an essential part of battery pack 10a according to another example of the exemplary embodiment. In this example, two battery modules 12 and 12a, identical to the one illustrated in FIGS. 1 to 8, are arranged in the up-down direction inside a pack case, with sides of two battery modules 12 and 12a that have positive terminals 21, namely battery exhaust valves 34, of cylindrical batteries 20 facing each other. Battery modules 12 and 12a are vertically separated, and exhaust passage 82a is formed between battery modules 12 and 12a, communicating with the outside of pack case 80. Lower battery module 12 has the same configuration as the one illustrated in FIGS. 2 to 8, and upper battery module 12a structurally corresponds to flipped lower battery module 12 in the up-down direction.

With battery exhaust valves 34 of respective cylindrical batteries 20 of two battery modules 12 and 12a being positioned to face each other as in this example, gas exhausted from battery exhaust valve 34 of an anomalous battery easily comes into contact with an external side of exhaust valve 34 of cylindrical battery 20 facing the anomalous battery. Furthermore, since two battery modules 12 and 12a share the gas exhaust passage, the exhaust of the gas, which has a high temperature, from the anomalous battery is likely to have a significant effect on other neighboring batteries. However, according to the configuration of this example, even if one of cylindrical batteries 20, such as upper-left cylindrical battery 20 in FIG. 11, becomes an anomalous battery experiencing an anomaly and exhausts the gas in a direction indicated by arrow β, the gas from the anomalous battery can be prevented from coming into contact with those other neighboring batteries through respective larger holder openings. Therefore, the thermal effect on those neighboring batteries can be restrained. Moreover, each of two upper and lower battery modules 12 and 12a does not require, in addition to battery holder 40, a plate-shaped member including one-way open valves, thus allowing for reduced manufacturing costs of battery pack 10a, improved energy density, and prevention of a decrease in volume of exhaust passage 82a. Other configurations and effects of this example are similar to those described with FIGS. 1 to 8.

Although not illustrated, a battery module according to another example may have a single-sided current collection configuration. In other words, positive electrode leads and negative electrode leads may be led from a terminal board disposed only on a top of cylindrical batteries to be connected to respective positive electrode terminals and respective negative electrode terminals of the cylindrical batteries. Since there is no need to connect the electrode lead to a lower end of each of the cylindrical batteries in this case, in order for the electrode leads to be connected, smaller holder openings are not needed respectively in lid parts of, for example, a battery holder's lower holder facing the lower end of each cylindrical battery. The lower end of each cylindrical battery includes a battery exhaust valve shaped by an annular thin-walled part or the like. Furthermore, each of the lid parts of the lower holder includes an opening cover part that creates a larger holder opening greater in outside diameter than the battery exhaust valve. This opening cover part has no smaller holder opening. Formed in a pack case of a battery pack to lead to the opening cover parts of the battery holder is an exhaust passage that communicates with the outside of the pack case. In this example, the lower end of the cylindrical battery corresponds to the one of the axial ends. This configuration requires no smaller holder openings in the part of the battery holder that leads to the exhaust passage, thus allowing for a further restrained thermal effect on neighboring batteries even when one of the cylindrical batteries becomes an anomalous battery.

### REFERENCE MARKS IN THE DRAWINGS

10, 10a: battery pack
12: battery module
14: battery block
21: positive electrode terminal
20: cylindrical battery
22: electrode group
23: positive electrode
24: negative electrode
25: separator
26: insulating plate
27: positive electrode tab
30: battery case
31: case body
32: sealing member
33: thin-walled part
34: battery exhaust valve
35: gasket
40, 40a: battery holder
41, 41a: upper holder
42: plate part
43: upper housing part
44: lid part
45: opening cover part
45a: smaller holder opening
46: weak part
47: groove
48: peripheral body wall part
48a: lower peripheral wall part
49: first stepped part
50: larger holder opening
51: lower holder
58: peripheral body wall part
58a: upper peripheral wall part
60: positive electrode terminal board
63: through hole
64: positive electrode lead
70: negative electrode terminal board
73: through hole
74: opening cover part
75: slit
80: pack case
81: through hole
82, 82a: exhaust passage

## Claims

1. A battery pack (10, 10a) comprising:
a battery module (12) including
a plurality of batteries (14) each including, at one end of the battery in a specified direction, a battery exhaust valve (34) that opens in response to an increase in internal pressure in the battery (12) and
a battery holder (40, 40a) including a plurality of housing parts (43, 53) in each of which the one end of a corresponding one of the plurality of batteries (12) is inserted; and
a pack case (80) housing the battery module (12) and internally including an exhaust passage (82) through which gas discharged from at least one of the plurality of batteries (12) is discharged out of the pack case (80), wherein
each of the plurality of housing parts (43, 53) includes a lid part (44) facing the battery exhaust valve (34) of a corresponding one of the plurality of batteries (12), and
the lid part (44) includes an opening cover part (45) that creates a larger holder opening (50) in the lid part (44) when the opening cover part (45) is separated from the lid part (44), the larger holder opening (50) including a greater outside diameter than an outside diameter of the battery exhaust valve (34), the opening cover part (45) including a ring-shaped or incomplete ring-shaped outer periphery that is defined by a weak part of the opening cover part (45) with less strength than a strength of a part external to the opening cover part (45) **characterized in that**, the weak part of the opening cover part (45) is designed so that for an anomalous battery, the battery exhaust valve (34) bumps against outwardly positioned opening cover part (45) of lid part (44) of upper holder (41) and separates opening cover part (45) from a part of lid part (44) that is external to opening cover part (45), thus creating larger holder opening (50).

2. The battery pack (10, 10a) according to claim 1, wherein
the battery holder (40, 40a) is resin-made, and
the weak part is shaped by a thin-walled part where the lid part (44) of the battery holder (40, 40a) that is resin-made is reduced in thickness, a through part passing through the lid part (44) that is resin-made along the thickness of the lid part (44), or a combination of the thin-walled part and the through part.

3. The battery pack (10, 10a) according to claim 1 or 2, wherein
the battery holder (40, 40a) is resin-made, and
the lid part (44) is made of a thermosetting resin.

4. The battery pack (10, 10a) according to any one of claims 1 to 3, wherein
the lid part (44) includes, in the opening cover part (45), a smaller holder opening with a smaller diameter than a diameter of the battery exhaust valve (34), and
a lead (64) is connected to a terminal board (60) disposed closer to the exhaust passage (82, 82a) than the battery holder (40, 40a) is and is electrically connected to an electrode terminal (27) of one end of the battery (12) in the specified direction through the smaller holder opening.

5. The battery pack (10, 10a) according to any one of claims 1 to 4, wherein
at least two battery modules (12) include a plurality of the battery modules and respectively include the pluralities of batteries that respectively include the battery exhaust valves (34) facing each other, and
an exhaust passage (82) is provided between two battery modules of the at least two battery modules for gas discharged from the pluralities of batteries housed in the two battery modules to be discharged out of the pack case (80).

## Patentansprüche

1. Batteriepack (10, 10a), umfassend:
ein Batteriemodul (12), umfassend:
eine Vielzahl von Batterien (14), die jeweils an einem Ende der Batterie in einer angegebenen Richtung ein Batterie-Auslassventil (34) umfassen, das sich als Reaktion auf eine Erhöhung beim Innendruck in der Batterie (12) öffnet und
einen Batteriehalter (40, 40a), der eine Vielzahl von Gehäuseteilen (43, 53) umfasst, wobei in jedem davon ein Ende einer entsprechenden der Vielzahl von Batterien (12) eingesetzt ist; und
einen Packkasten (80), der das Batteriemodul (12) unterbringt und innen einen Auslassdurchgang (82) umfasst, durch den Gas abgelassen wird, das von mindestens einer der Vielzahl von Batterien (12) aus dem Packkasten (80) abgelassen wird, wobei
jeder der Vielzahl von Gehäuseteilen (43, 53) einen Deckelteil (44) umfasst, der dem Batterie-Auslassventil (34) einer entsprechenden der Vielzahl von Batterien (12) zugewandt ist, und
der Deckelteil (44) einen Öffnungsabdeckungsteil (45) umfasst, der eine größere Halteröffnung (50) in dem Deckelteil (44) schafft, wenn der Öffnungsabdeckungsteil (45) von dem Deckelteil (44) getrennt ist, wobei die größere Halteröffnung (50) einen größeren Außendurchmesser aufweist als ein Außendurchmesser des Batterie-Auslassventils (34), wobei der Öffnungsabdeckungsteil (45) einen äußeren Umfang in der Form eines Rings oder eines unvollständigen Rings umfasst, der durch einen schwachen Teil des Öffnungsabdeckungsteils (45) mit geringerer Festigkeit als eine Festigkeit eines Teils außerhalb des Öffnungsabdeckungsteils (45) definiert ist, **dadurch gekennzeichnet, dass** der schwache Teil des Öffnungsabdeckungsteils (45) derart gestaltet ist, dass für eine abnormale Batterie das Batterie-Auslassventil (34) gegen den außen positionierten Öffnungsabdeckungsteil (45) des Deckelteils (44) des oberen Halters (41) stößt und den Öffnungsabdeckungsteil (45) von einem Teil des Deckelteils (44) trennt, der außerhalb des Öffnungsabdeckungsteils (45) liegt, wodurch eine größere Halteröffnung (50) geschaffen wird.

2. Batteriepack (10, 10a) nach Anspruch 1, wobei
der Batteriehalter (40, 40a) aus Harz besteht, und
der schwache Teil durch einen dünnwandigen Teil, wo die Dicke des Deckelteils (44) des Batteriehalters (40, 40a), der aus Harz besteht, vermindert ist, einen Durchgangsteil, der den Deckelteil (44), der aus Harz besteht, entlang der Dicke des Deckelteils (44) durchquert, oder eine Kombination aus dem dünnwandigen Teil und dem Durchgangsteil geformt ist.

3. Batteriepack (10, 10a) nach Anspruch 1 oder 2, wobei
der Batteriehalter (40, 40a) aus Harz besteht, und
der Deckelteil (44) aus einem wärmehärtbaren Harz besteht.

4. Batteriepack (10, 10a) nach einem der Ansprüche 1 bis 3, wobei
der Deckelteil (44) im Öffnungsabdeckungsteil (45) eine kleinere Halteröffnung mit einem kleineren Durchmesser als ein Durchmesser des Batterie-Auslassventils (34) umfasst, und
eine Leitung (64) mit einer Anschlussplatte (60) verbunden ist, die näher an dem Auslassdurchgang (82, 82a) angeordnet ist als der Batteriehalter (40, 40a) und elektrisch mit einem Elektrodenanschluss (27) eines Endes der Batterie (12) in der angegebenen Richtung durch die kleinere Halteröffnung verbunden ist.

5. Batteriepack (10, 10a) nach einem der Ansprüche 1 bis 4, wobei
mindestens zwei Batteriemodule (12) eine Vielzahl von Batteriemodulen umfassen und jeweils die Vielzahlen von Batterien umfassen, die jeweils die Batterie-Auslassventile (34) umfassen, die einander zugewandt sind, und
ein Auslassdurchgang (82) zwischen zwei Batteriemodulen der mindestens zwei Batteriemodule für Gas bereitgestellt ist, das von den Vielzahlen von Batterien, die in den zwei Batteriemodulen untergebracht sind, abgelassen wird, um aus dem Packkasten (80) abgelassen zu werden.

## Revendications

1. Bloc-batterie (10, 10a) comprenant :
un module de batterie (12) comprenant :
une pluralité de batteries (14) comprenant chacune, au niveau d'une extrémité de la batterie dans une direction spécifiée, une soupape d'échappement de batterie (34) qui s'ouvre en réponse à une augmentation de pression interne dans la batterie (12), et
un support de batterie (40, 40a) comprenant une pluralité de parties de logement (43, 53), dans chacune desquelles est insérée la une extrémité d'une batterie correspondante de la pluralité de batteries (12) ; et
un boîtier de bloc (80) logeant le module de batterie (12) et comprenant intérieurement un passage d'échappement (82) à travers lequel le gaz déchargé par au moins l'une de la pluralité de batteries (12) est déchargé hors du boîtier de bloc (80), dans lequel :
chacune de la pluralité de parties de logement (43, 53) comprend une partie de couvercle (44) faisant face à la soupape d'échappement de batterie (34) d'une batterie correspondante de la pluralité de batteries (12), et
la partie de couvercle (44) comprend une partie de recouvrement d'ouverture (45) qui crée une plus grande ouverture de support (50) dans la partie de couvercle (44) lorsque la partie de recouvrement d'ouverture (45) est séparée de la partie de couvercle (44), la plus grande ouverture de support (50) comprenant un plus grand diamètre extérieur qu'un diamètre extérieur de la soupape d'échappement de batterie (34), la partie de recouvrement d'ouverture (45) comprenant une périphérie externe de forme annulaire ou de forme annulaire incomplète qui est définie par une partie de faiblesse de la partie de recouvrement d'ouverture (45) avec moins de résistance qu'une résistance d'une partie externe par rapport à la partie de recouvrement d'ouverture (45), **caractérisé en ce que** la partie de faiblesse de la partie de recouvrement d'ouverture (45) est conçue de sorte que, pour une batterie présentant une anomalie, la soupape d'échappement de batterie (34) se heurte contre la partie de recouvrement d'ouverture (45) positionnée vers l'extérieur de la partie de couvercle (44) du support supérieur (41) et sépare la partie de recouvrement d'ouverture (45) d'une partie de la partie de couvercle (44) qui est à l'extérieur de la partie de recouvrement d'ouverture (45), créant ainsi une plus grande ouverture de support (50).

2. Bloc-batterie (10, 10a) selon la revendication 1, dans lequel :
le support de batterie (40, 40a) est réalisé à partir de résine, et
la partie de faiblesse est formée par une partie à fine paroi où la partie de couvercle (44) du support de batterie (40, 40a) qui est réalisée à partir de résine, est réduite en épaisseur, une partie traversante traversant la partie de couvercle (44) qui est réalisée à partir de résine le long de l'épaisseur de la partie de couvercle (44) ou d'une combinaison de la partie à fine paroi et de la partie traversante.

3. Bloc-batterie (10, 10a) selon la revendication 1 ou 2, dans lequel :
le support de batterie (40, 40a) est réalisé à partir de résine, et
la partie de couvercle (44) est réalisée à partir de résine thermodurcissable.

4. Bloc-batterie (10, 10a) selon l'une quelconque des revendications 1 à 3, dans lequel :
la partie de couvercle (44) comprend, dans la partie de recouvrement d'ouverture (45), une plus petite ouverture de support avec un plus petit diamètre qu'un diamètre de la soupape d'échappement de batterie (34), et
un fil conducteur (64) est raccordé à une plaque à bornes (60) disposée plus à proximité du passage d'échappement (82, 82a) que ne l'est le support de batterie (40, 40a) et est électriquement raccordé à une borne d'électrode (27) d'une extrémité de la batterie (12) dans la direction spécifiée à travers la plus petite ouverture de support.

5. Bloc-batterie (10, 10a) selon l'une quelconque des revendications 1 à 4, dans lequel :
au moins deux modules de batterie (12) comprennent une pluralité de modules de batteries et comprennent respectivement les pluralités de batteries qui comprennent respectivement les soupapes d'échappement de batterie (34) se faisant face, et
un passage d'échappement (82) est prévu entre deux modules de batterie des au moins deux modules de batterie pour que le gaz déchargé par la pluralité de batteries logées dans les deux modules de batterie, soit déchargé hors du boîtier de bloc (80).
